# EUROPÄISCHE PATENTSCHRIFT

(11) **EP 3 107 420 B1**
(45) Veröffentlichungstag und Bekanntmachung des Hinweises auf die Patenterteilung: **29.08.2018**
(21) Anmeldenummer: 15710119.7
(22) Anmeldetag: 20.02.2015
(51) Int. Cl.: A47B 9/20, B66F 3/00, A61G 13/06, A61G 13/10

(54) **HUBSÄULE FÜR EINE MEDIZINISCHE EINRICHTUNG**
LIFTING COLUMN FOR A MEDICAL DEVICE
COLONNE DE LEVAGE POUR DISPOSITIF MÉDICAL

(30) Priorität: 21.02.2014 DE 102014102308
(43) Veröffentlichungstag der Anmeldung: 28.12.2016
(73) Patentinhaber: Maquet GmbH, 76437 Rastatt (DE)
(72) Erfinder: REVENUS, Rolf, 76456 Kuppenheim (DE)
(74) Vertreter: Zacco GmbH
(86) Internationale Anmeldenummer: PCT/EP2015/053652
(87) Internationale Veröffentlichungsnummer: WO 2015/124745

(56) Entgegenhaltungen:
- WO-A2-02/058615
- WO-A2-03/030802
- DE-A1- 19 623 580
- US-A- 5 791 233

## Beschreibung

Die Erfindung betrifft eine Hubsäule für eine medizinische Einrichtung, mit mindestens zwei Säulenelementen, die in ihrer übereinstimmenden Längsrichtung relativ zueinander bewegbar sind, und mit mindestens einem Gleitelement, das an einer Innenfläche eines ersten der beiden Säulenelemente befestigt ist. Das Gleitelement hat eine Gleitfläche, die an einer der Innenfläche des ersten Säulenelements zugewandten Außenfläche eines zweiten der beiden Säulenelemente gleitend gelagert ist. Weiterhin betrifft die Erfindung ein Verfahren zum Zusammensetzen einer solchen Hubsäule.

Die US 5,791,233 offenbart eine Hubsäule mit Teleskopführungen.

Die DE 196 23 580 A1 beschreibt eine Hubsäule für Patientenbetten.

Hubsäulen für medizinische Einrichtungen finden sich beispielsweise in Operationstischen, Transportern für Lagerflächen oder Zureichewägen. Die Anforderungen an solche Hubsäulen werden im Folgenden am Beispiel eines Operationstischs erläutert.

Vor und während einer Operation eines auf einer Patientenlagerfläche eines Operationstischs gelagerten Patienten wird die Patientenlagerfläche in eine Position gebracht, die einen Eingriff am Patienten ermöglicht. Dabei kann es erforderlich sein, die Patientenlagerfläche um eine horizontale Achse in einem vergleichsweise großen Winkelbereich zu verschwenken. Auch die Höhe der Patientenlagerfläche des Operationstisches sollte in einem möglichst großen Bereich einstellbar sein. Idealerweise lässt sich der Operationstisch auch so einstellen, dass die Patientenlagerfläche in sehr geringen Höhen angeordnet ist, was eine platzsparende Bauweise der Operationstischsäule voraussetzt.

Auch während der Operation kann es erforderlich sein, die Lage, insbesondere die Höhe, eines Patienten zu verändern. Die der Lageveränderung dienenden Bauteile müssen deshalb zuverlässig funktionieren. Insbesondere müssen diese Bauteile so präzise geführt sein, dass eine Höhenverstellung ohne Verkanten der Bauteile möglich ist. Zudem neigen die beweglichen Bauteile des Operationstischs zum Verschleiß und müssen deshalb besonders stabil und langlebig ausgeführt sein.

Typischerweise werden die zur Höhenverstellung dienenden Bauteile als Hubsäulen ausgeführt, bei denen mehrere Säulenelemente entlang ihrer gemeinsamen Längsachse ineinander verschoben werden. Da die Innenflächen der Säulenelemente der Bearbeitung schlecht zugänglich sind, sind diese oft weniger präzise, insbesondere weniger glatt ausgeführt. Deshalb eignen sie sich nicht so gut als Gleitflächen wie die leichter bearbeitbaren Außenflächen der Säulenelemente.

Aus der Druckschrift DE 202007014791 U1 ist eine Hubsäule mit einem Innenprofil und einem Außenprofil bekannt, die in ihrer übereinstimmenden Längsrichtung relativ zueinander bewegbar sind. Zwischen den beiden Profilen befinden sich Gleitelemente als Abstandhalter. Dabei sind die Gleitelemente jeweils an einem der Profile befestigt, während sie am jeweils anderen Profil gleiten. Das jeweilige Gleitelement ist zweiteilig und keilförmig ausgeführt. Die beiden Gleitelemente sind mittels einer Stellschraube relativ zueinander verschiebbar und dadurch in ihrer Gesamtdicke variierbar. Ein Nachteil dieser Gleitelemente besteht darin, dass sie bei der Montage aufwendig in dem jeweiligen Profil fixiert werden müssen. Des Weiteren müssen diese Gleitelemente nach einiger Zeit der Benutzung nachjustiert werden. Dies erfordert einen weiteren aufwendigen Eingriff.

Es ist Aufgabe der Erfindung, eine Hubsäule für einen Operationstisch anzugeben, die einfach zu montieren ist und im Wesentlichen keine Nachjustage der Gleitelemente erfordert.

Diese Aufgabe wird durch eine Hubsäule mit den Merkmalen des Anspruchs 1 sowie durch ein Verfahren mit den Merkmalen des nebengeordneten Anspruchs 13 gelöst. Vorteilhafte Weiterbildungen der Erfindung sind in den abhängigen Ansprüchen angegeben.

Die erfindungsgemäße Hubsäule hat mindestens zwei Säulenelemente, die in ihrer übereinstimmenden Längsrichtung relativ zueinander bewegbar sind, und mindestens ein Gleitelement, das an einer Innenfläche eines ersten der beiden Säulenelemente befestigt ist. Das Gleitelement hat eine Gleitfläche, die an einer der Innenfläche des ersten Säulenelements zugewandten Außenfläche eines zweiten der beiden Säulenelemente gleitend gelagert ist. In einem Raum zwischen der Gleitfläche des Gleitelements und der Innenfläche des ersten Säulenelements ist eine Vergussmasse ausgehärtet.

Durch die vorstehend angegebene Hubsäule wird erreicht, dass das Gleitelement gleichmäßig von der Vergussmasse an die Außenfläche des zweiten Säulenelements gedrückt wird. Insbesondere sind herstellungsbedingte Unebenheiten der Innenfläche des ersten Säulenelements einfacher ausgleichbar, als dies durch ein vorgefertigtes festes Bauteil möglich wäre. Die Vergussmasse ist einfach einzufüllen und muss nicht wie ein festes Bauteil aufwendig am ersten Säulenelement befestigt werden.

Das erste und das zweite Säulenelement haben einen geschlossenen Querschnitt. Insbesondere ist das erste Säulenelement ein länglicher Hohlkörper. Das zweite Säulenelement ist ein länglicher Körper, der vorzugsweise wie das erste Säulenelement innen hohl ist. Als Vergussmasse kann ein Gießharz verwendet werden, das druckstabil und schwindungsarm ist. Dadurch wird beim Aushärten ein Volumenschwund weitestgehend vermieden. Die Druckstabilität der Vergussmasse erlaubt es, dass letztere die Kräfte zwischen der Innenfläche des ersten Säulenelements und der Au-ßenfläche des zweiten Säulenelements gut überträgt. Außerdem werden hohe mechanische Beanspruchungen des Gleitelements vermieden.

Eine vorteilhafte Weiterbildung der Erfindung besteht darin, dass das erste Säulenelement mindestens ein Durchgangsloch zum Einfüllen der auszuhärtenden Vergussmasse hat. Dadurch kann die Vergussmasse leicht von außen in den Raum zwischen der Gleitfläche und der Innenfläche des ersten Säulenelements eingefüllt werden. Vorzugsweise ist das Durchgangsloch eine Bohrung in der Wand des ersten Säulenelements.

Vorzugsweise hat das Gleitelement einen Tragekörper und eine Gleitschicht mit einer die Gleitfläche bildenden Oberfläche. Die Gleitschicht kontaktiert in diesem Fall über ihre Gleitfläche die Außenwand des zweiten Säulenelements, während der Tragekörper die Vergussmasse kontaktiert. Durch die schichtweise Ausführung des Gleitelements können optimale Gleiteigenschaften mit der nötigen Stabilität kombiniert werden. Die Gleitschicht ist dabei vorzugsweise aus einem Verbundwerkstoff und der Tragekörper vorzugsweise aus Metall gefertigt.

Ferner ist es vorteilhaft, wenn der Tragekörper rechteckig geformt ist und die Gleitschicht zumindest auf einem Teil der der Außenfläche des zweiten Säulenelements zugewandten Oberfläche des Tragekörpers angeordnet ist. Durch seine rechteckige Form ist das Gleitelement in eine Hubsäule, die typischerweise einen rechteckigen Querschnitt hat, gut einpassbar und stabilisiert die beiden Säulenelemente optimal gegen ein Verkippen um eine Achse, die senkrecht zur gemeinsamen Längsachse der Säulenelemente liegt.

Bei einer weiteren vorteilhaften Weiterbildung der Erfindung haftet das Gleitelement durch die ausgehärtete Vergussmasse an der Innenfläche des ersten Säulenelements. Dadurch erübrigt sich eine weitere mechanische Verbindung des Tragekörpers mit dem ersten Säulenelement. Das Gleitelement haftet dabei insbesondere so an der Innenfläche des ersten Säulenelements, dass es translationsfest mit dieser Innenfläche verbunden ist.

Ferner ist es vorteilhaft, wenn das Gleitelement mindestens ein Rastelement hat, das in einer Aussparung des ersten Säulenelements aufgenommen ist und über das das Gleitelement in Längsrichtung des ersten Säulenelements fixiert ist. Dadurch vereinfacht sich das Einbringen des Gleitelements beim Zusammensetzen der Hubsäule.

Ferner ist eine Dichtung zwischen dem Gleitelement und der Innenfläche des ersten Säulenelements um den die Vergussmasse aufnehmenden Raum umlaufend angeordnet. Dadurch wird verhindert, dass die Vergussmasse beim Einfüllen aus dem Raum zwischen der Gleitfläche und der Innenfläche des ersten Säulenelements herausfließt. Außerdem kann dadurch der Raum möglichst vollständig mit Vergussmasse ausgefüllt werden, so dass die Druckstabilität und die Haftung maximiert werden.

Die Dichtung ist senkrecht zur Längsachse des ersten Säulenelements elastisch verformbar. In Folge der Elastizität der Dichtung wird das Gleitelement gegen die Außenfläche des zweiten Säulenelements gedrückt. Damit sind optimale Gleiteigenschaften sichergestellt.

Haben das erste und das zweite Säulenelement jeweils einen rechteckigen Querschnitt, so besteht eine weitere vorteilhafte Weiterbildung darin, dass das mindestens eine Gleitelement vier Gleitelemente umfasst, und dass an jeder der vier Innenflächen des ersten Säulenelements jeweils eines der vier Gleitelemente befestigt ist. Dadurch ist auf einfache Weise eine gleichartige Gleitlagerung zwischen den miteinander in Anlage befindlichen Flächen der beiden Säulenelemente realisierbar.

Ferner ist es vorteilhaft, wenn das zweite Säulenelement durch das mindestens eine Gleitelement koaxial zur Längsachse des ersten Säulenelements geführt ist. Dadurch sind keine weiteren gleitend gelagerten Führungselemente nötig, die bei einer Längsverschiebung des zweiten Säulenelements die Längsachse des zweiten Säulenelements koaxial zur Längsachse des ersten Säulenelements führen. Dies vereinfacht die Herstellung und reduziert die Reibung.

Eine vorteilhafte Weiterbildung der Erfindung besteht darin, dass die mindestens zwei Säulenelemente ein weiteres Säulenelement umfassen, dass mindestens ein weiteres Gleitelement mit einer Gleitfläche vorgesehen ist, und dass das weitere Säulenelement koaxial in dem zweiten Säulenelement geführt ist und in der zum zweiten Säulenelement übereinstimmenden Längsrichtung relativ zum zweiten Säulenelement bewegbar ist. Dabei ist die Gleitfläche des weiteren Gleitelements an einer der Innenfläche des zweiten Säulenelements zugewandten Außenfläche des dritten Säulenelements gleitend gelagert und eine weitere Vergussmasse in einem weiteren Raum zwischen der Gleitfläche des zweiten Gleitelements und der Innenfläche des zweiten Säulenelements ausgehärtet. Durch diese Weiterbildung ist eine einfache und stabile Gleitlagerung von Hubsäulen mit drei Säulenelementen, die teleskopartig ineinander verschiebbar sind, realisierbar. Eine entsprechende Realisierung für Hubsäulen mit vier oder mehr teleskopartig ineinander verschiebbaren Säulenelementen ist auf analoge Weise möglich.

Ein weiterer Aspekt der Erfindung betrifft ein Verfahren zum Zusammensetzen einer Hubsäule mit mindestens zwei Säulenelementen, die in ihrer übereinstimmenden Längsrichtung relativ zueinander bewegbar sind, wobei mindestens ein mit einer Gleitfläche versehenes Gleitelement an einer Innenfläche eines ersten der beiden Säulenelemente befestigt und die Gleitfläche des Gleitelements an einer der Innenfläche des ersten Säulenelements zugewandten Außenfläche eines zweiten der beiden Säulenelemente gleitend gelagert wird. Dabei wird eine Vergussmasse in einen Raum zwischen der Gleitfläche des Gleitelements und der Innenfläche des ersten Säulenelements eingebracht und ausgehärtet.

Dieses Verfahren ermöglicht es, eine Hubsäule auf einfache Weise zusammenzusetzen, ohne die Gleitelemente aufwendig an der Innenfläche des ersten Säulenelements zu befestigen. Zudem entfällt bei Wahl einer geeigneten Vergussmasse die Notwendigkeit einer späteren Justage der Gleitelemente.

Das erfindungsgemäße Verfahren umfasst weiterhin, dass beim Befestigen des Gleitelements an der Innenfläche des ersten Säulenelements nacheinander folgende Schritte durchgeführt werden:
Einbringen eines Vorspannelements, an dessen Außenseite das Gleitelement federnd gelagert ist, in das erste Säulenelement, bis an dem Gleitelement angebrachte Rastelemente in dafür vorgesehene Aussparungen an der Innenseite des ersten Säulenelements einrasten und das Gleitelement an dem ersten Säulenelement in Längsrichtung festsetzen, und Einführen des zweiten Säulenelements in das erste Säulenelement in Längsrichtung derart, dass das Vorspannelement beim Einführen in Längsrichtung relativ zu dem eingerasteten Gleitelement verschoben und aus dem ersten Säulenelement entfernt wird und eine an dem Gleitelement angebrachte elastisch verformbare Dichtung die Gleitfläche des Gleitelements an die Außenfläche des zweiten Säulenelements drückt.

Durch dieses Verfahren wird das Einbringen des Gleitelements weiter vereinfacht. Das Gleitelement wird durch die federnde Wirkung des Vorspannelementes in seiner Position gehalten. Das Gleitelement wird dabei so weit gegen die Innenfläche des ersten Säulenelements gedrückt, dass das koaxial einzuführende zweite Säulenelement mit seinem in Einführrichtung liegenden Ende zunächst nur das Vorspannelement kontaktiert und nicht das Gleitelement. Vorzugsweise ist das Vorspannelement an dem Gleitelement in Längsrichtung der Säulenelemente gleitend gelagert, so dass beim Einführen des zweiten Säulenelements das Vorspannelement aus dem ersten Säulenelement herausgeschoben wird und die federnde Lagerung des Gleitelements an dem Vorspannelement gelöst wird. Nachdem das Vorspannelement entfernt ist, wird das Gleitelement vorzugsweise durch seine Dichtung an die Außenfläche des mittlerweile eingeführten zweiten Säulenelements gedrückt.

Ferner ist es vorteilhaft, wenn der Raum zwischen der Gleitfläche des einzubringenden Gleitelements und der Innenfläche des ersten Säulenelements durch mindestens ein erstes in der Außenwand des ersten Säulenelements ausgebildetes Durchgangsloch mit Vergussmasse befüllt wird und Luft im Raum zwischen der Gleitfläche des einzubringenden Gleitelements und der Innenfläche des ersten Säulenelements durch mindestens ein zweites in der Außenwand des ersten Säulenelements ausgebildetes Durchgangsloch entweicht. Dadurch kann der Raum einfach mit Vergussmasse befüllt werden, insbesondere wenn eine den Raum luftdicht abdichtende Dichtung vorhanden ist.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert. Es zeigen:
- Figur 1: eine perspektivische Darstellung eines Teils einer Hubsäule eines Operationstischs;
- Figur 2: eine perspektivische Seitenansicht eines Gleitelements;
- Figur 3: den Querschnitt der Hubsäule nach Figur 1; und
- Figur 4: einen schematischen Längsschnitt einer weiteren Hubsäule, die nur zwei Säulenelemente umfasst, bei der Montage.

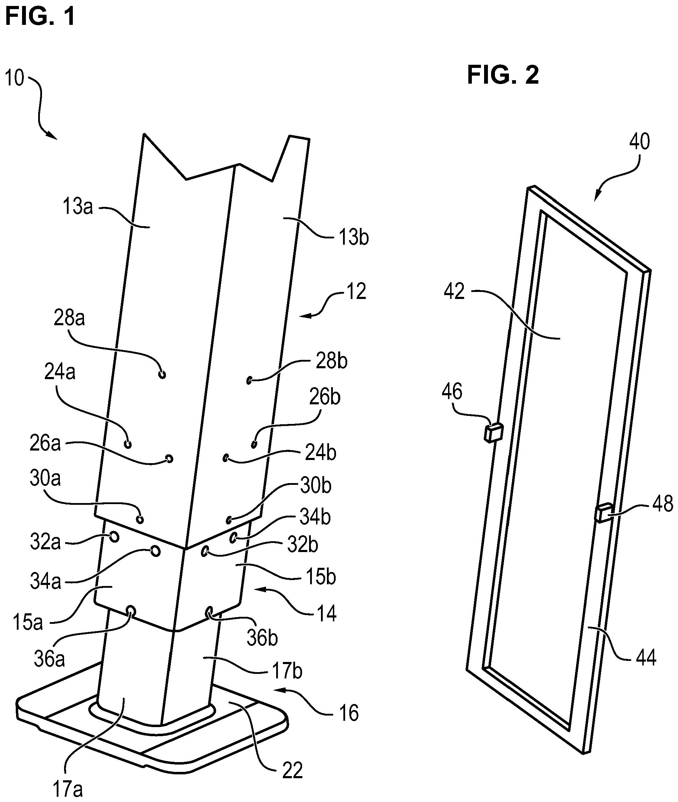

Figur 1 ist eine perspektivische Darstellung eines Teils einer für einen nicht gezeigten Operationstisch vorgesehenen Hubsäule 10. Die Hubsäule 10 umfasst ein erstes Säulenelement 12, ein zweites Säulenelement 14 und ein drittes Säulenelement 16. Das dritte Säulenelement 16 ist mechanisch fest mit einer Fußplatte 22 verbunden, auf der die Hubsäule 10 steht. Die drei Säulenelemente 12, 14, 16 haben eine gemeinsame Längsachse und sind längs dieser relativ zueinander verschiebbar. Bei einer Verschiebung der Säulenelemente 12, 14, 16 werden diese teleskopartig ineinander oder auseinander bewegt.

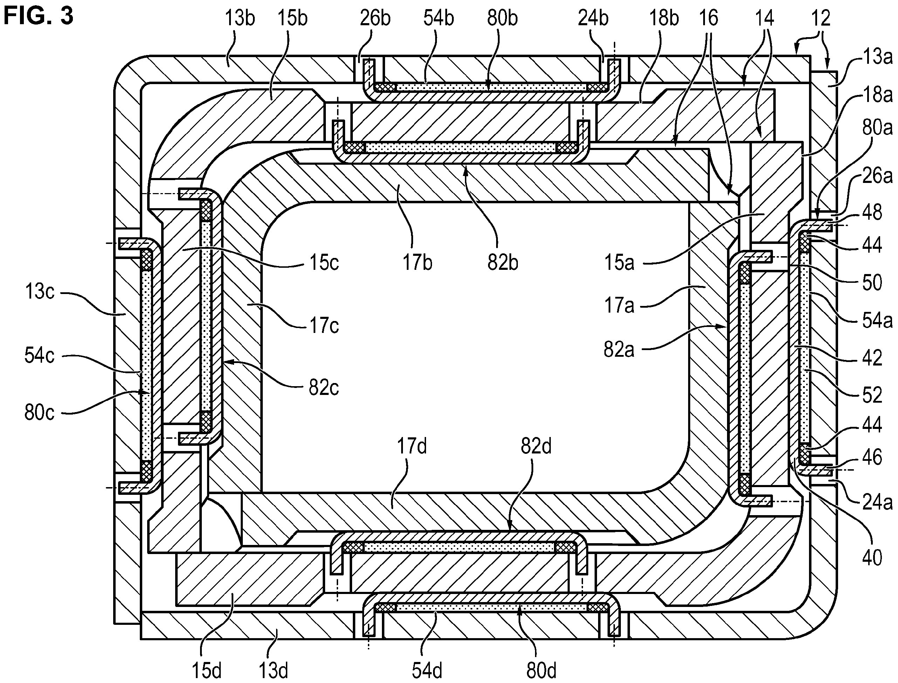

Die drei Säulenelemente 12, 14, 16 haben jeweils einen rechteckigen Querschnitt (vgl. Fig. 3) und sind innen hohl. Die Seiten dieses Querschnitts sind durch eine erste Wand 13a, eine zweite Wand 13b, eine dritte Wand 13c und eine vierte Wand 13d des Säulenelements 12, die gleichartig aufgebaut sind, gebildet. Im Folgenden wird repräsentativ für die Wände 13a bis 13d die Wand 13a des ersten Säulenelements 12 beschrieben.

Die Wand 13a hat eine Einfüllöffnung 30a für eine Vergussmasse und eine Entlüftungsöffnung 28a, durch die beim Einfüllen der Vergussmasse verdrängte Luft entweicht. Des Weiteren hat die Wand 13a eine erste Befestigungsöffnung 24a und eine zweite Befestigungsöffnung 26a, an denen Rastelemente 46, 48 eines an der Innenfläche des ersten Säulenelements 12 befestigbaren, in Fig. 2 gezeigten Gleitelements 40 einrasten. Sowohl Entlüftungs- und Einfüllöffnung 28a, 30a als auch die Befestigungsöffnungen 24a, 26a sind als Durchgangslöcher ausgebildet. Die Bezugszeichen der entsprechenden Komponenten der Wände 13b, 13c und 13d sind mit den Buchstaben b, c und versehen.

Das zweite Säulenelement 14 ist gleichartig aufgebaut wie das erste Säulenelement 12 und an diesem gleitend gelagert. Die Wände des zweiten Säulenelements 14 sind mit 15a, 15b, 15c und 15d bezeichnet. Entsprechend sind die Einfüllöffnungen mit 36a bis 36d, die ersten Befestigungsöffnungen mit 32a bis 32d und die zweiten Befestigungsöffnungen mit 34a bis 34d bezeichnet. Das dritte Säulenelement 16 ist auf die gleiche Weise an dem zweiten Säulenelement 14 gleitend gelagert, wie das zweite Säulenelement 14 an dem ersten Säulenelement 12 gleitend gelagert ist. Das dritte Säulenelement weist die Wände 17a, 17b, 17c und 17d auf.

Figur 2 zeigt eine perspektivische Seitenansicht des Gleitelements 40, das für die erfindungsgemäße gleitende Lagerung der Säulenelemente 12, 14, 16 verwendet wird. Es hat einen rechteckigen Gleitkörper 42, an dessen Rand eine Dichtung 44 umlaufend angeordnet ist. Des Weiteren weist das Gleitelement 40 die beiden vorstehend erwähnten Rastelemente 46 und 48 auf. Die Rastelemente 46 und 48 sind zu den Befestigungsöffnungen 24a und 26a komplementär ausgebildet und können in diesen aufgenommen werden. An der den Rastelementen 46 und 48 abgewandten Seite des Gleitelements 40 ist eine Gleitfläche ausgebildet.

Figur 3 zeigt den Querschnitt der Hubsäule nach Figur 1. Repräsentativ wird im Folgenden eine allgemein mit 80a bezeichnete Gleitanordnung beschrieben, durch die eine erste Außenfläche 18a des zweiten Säulenelements 14 über das Gleitelement 40 an einer Innenfläche 54a des ersten Säulenelements 12 gleitend gelagert ist. Das Gleitelement 40 wird dabei an der schlecht bearbeitbaren und herstellungsbedingt unebenen Innenfläche 54a befestigt und gleitet mit seiner Gleitfläche 50 an der Außenfläche 18a des zweiten Säulenelements 14.

Das erste Rastelement 46 und das zweite Rastelement 48 des Gleitelements 40 sind jeweils in den Befestigungsöffnungen 24a und 26a aufgenommen und fixieren das Gleitelement 40 entgegen parallel zu der Innenfläche 54a gerichteten Verschiebekräften. Die Gleitfläche 50 des Gleitelements 40 wird sowohl durch die elastisch verformbare und umlaufende Dichtung 44 als auch insbesondere durch die zwischen dem Gleitkörper 42 und der Innenfläche 54a angeordnete Vergussmasse 52 gegen die Außenfläche 18a des zweiten Säulenelements 14 gedrückt.

Die Vergussmasse 52 wird bei der Montage durch die Einfüllöffnung 30a in fließfähiger Form eingefüllt und von der Dichtung 44 am Austreten aus dem Raum zwischen dem Gleitkörper 42 und der Innenfläche 54a gehindert. Infolge ihrer Fließfähigkeit kontaktiert die Vergussmasse 52 die Innenfläche 54a trotz deren Unebenheiten vollflächig, härtet anschließend aus und übt einen gleichmäßigen Druck auf den Gleitkörper 42 aus. Zudem haftet die Vergussmasse 52 sowohl an dem Gleitkörper 42 als auch an der Innenfläche 54a, so dass das Gleitelement 40 am ersten Säulenelement 12 fixiert ist.

An den drei anderen Wänden 13b, 13c, 13d des ersten Säulenelements 12 befindet sich jeweils eine weitere Gleitanordnung 80a, 80b und 80c, wodurch das erste Säulenelement 12 entlang der Längsachse des zweiten Säulenelements 14 geführt ist.

Auf gleichartige Weise ist das zweite Säulenelement 14 durch vier Gleitanordnungen 82a, 82b, 82c und 82d am dritten Säulenelement 16 gleitend gelagert und durch dieses entlang der Längsachse des dritten Säulenelements 16 geführt.

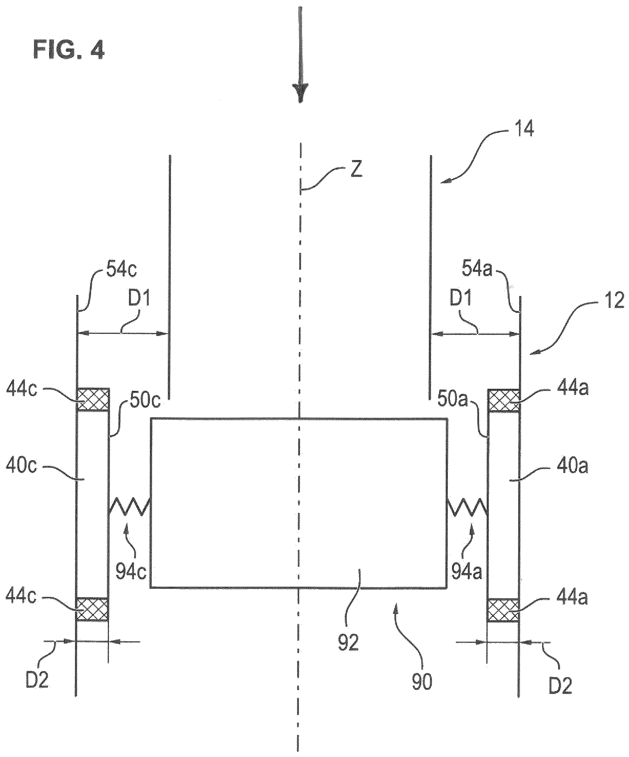

Unter Bezugnahme auf Fig. 4 wird im Folgenden beispielhaft ein Verfahren zur Montage der erfindungsgemäßen Hubsäule erläutert.

Figur 4 zeigt einen schematischen Längsschnitt einer Hubsäule 100, die in diesem Beispiel nur zwei Säulenelemente 12, 14 umfasst. Die Säulenelemente 12 und 14 sind gleichartig aufgebaut und durch gleichartige Gleitanordnungen 80a bis 80d gleitend aneinander gelagert, wie dies bei der Hubsäule 10 der Fall ist. In das erste Säulenelement 12 ist eine Anordnung aus einem Vorspannelement 90 und vier Gleitelementen, von denen in Fig. 4 nur das erste Gleitelement 40a und das dritte Gleitelement 40c sichtbar sind, eingeführt und über Rastelemente der Gleitelemente 40a bis 40d jeweils an den Innenflächen 54a bis 54d des ersten Säulenelements 12 befestigt. Das Vorspannelement 90, das allein zur Montage der Hubsäule 100 verwendet wird, drückt dabei das erste Gleitelement 40a und das dritte Gleitelement 40c so an einander entgegengesetzte Innenflächen 54a und 54c des ersten Säulenelements 12, dass die elastisch verformbaren Dichtungen 44a und 44c jeweils nach außen (in Fig. 4 nach links bzw. rechts) vorgespannt sind. Ein Vorspannkörper 92 des Vorspannelements 90 ist durch ein erstes Federelement 94a an dem ersten Gleitelement 40a und durch ein zweites Federelement 94b an dem dritten Gleitelement 40c federnd gelagert.

Das zweite Säulenelement 14 wird dann koaxial zu einer Längsachse Z in das erste Säulenelement 12 eingeführt. Die Einführrichtung ist durch einen Pfeil bezeichnet. Das Vorspannelement 90 drückt die Gleitelemente 40a, 40c dabei so weit an die jeweiligen Innenflächen 54a, 54c des ersten Säulenelements 12 heran, dass der Abstand D1 der jeweiligen Außenfläche des zweiten Säulenelements 14 zur zugehörigen Innenfläche 54a, 54c des ersten Säulenelements 12 größer ist als der Abstand D2 der jeweiligen Gleitfläche 50a, 50c des Gleitelements 40a, 40c zur zugehörigen Innenfläche 54a, 54c des ersten Säulenelements 12.

Durch die vorstehend erläuterte Anordnung wird beim Einführen des zweiten Säulenelements 14 nur der Vorspannkörper 92 von dem in Fig. 4 unteren Ende des zweiten Säulenelements 14 kontaktiert und in Einführrichtung verschoben. Dabei werden die Federelemente 94a und 94c zusammen mit dem Vorspannkörper 92 gleitend an den Gleitflächen 50a, 50c der Gleitelemente 40a und 40c verschoben, bis sie das untere Ende der Gleitelemente 40a, 40c erreichen und dann den Kontakt zu den Gleitelementen 40a, 40c verlieren. Dadurch fällt das Vorspannelement 90 aus dem ersten Säulenelement 12 nach unten heraus, und die Gleitflächen 50a, 50c der Gleitelemente 40a, 40c werden durch ihre elastisch verformten Dichtungen 44a, 44c an die jeweilige Außenfläche des zweiten Säulenelements 14 gedrückt. Das zweite Säulenelement 14 ist nach dem Durchführen der vorstehenden Schritte über die Gleitflächen 50a, 50c der Gleitelemente 40a, 40c an dem ersten Säulenelement 12 gleitend gelagert.

### Bezugszeichenliste

- 10: Hubsäule
- 12: erstes Säulenelement
- 13a bis 13d: erste bis vierte Wand des ersten Säulenelements
- 14: zweites Säulenelement
- 15a bis 15d: erste bis vierte Wand des zweiten Säulenelements
- 16: drittes Säulenelement
- 17a bis 17d: erste bis vierte Wand des dritten Säulenelements
- 18a bis 18b: erste bis vierte Außenfläche des zweiten Säulenelements
- 22: Fußplatte
- 24a, 24b: erste Befestigungsöffnungen
- 26a, 26b: zweite Befestigungsöffnungen
- 28a, 28b: Entlüftungsöffnungen
- 30a, 30b: Einfüllöffnungen
- 32a, 32b: erste Befestigungsöffnungen
- 34a, 34b: zweite Befestigungsöffnungen
- 36a, 36b: Einfüllöffnungen
- 40: Gleitelement
- 42: Gleitkörper
- 44: Dichtung
- 46: erstes Rastelement
- 48: zweites Rastelement
- 50: Gleitfläche
- 52: Vergussmasse
- 54a bis 54d: Innenflächen des ersten Säulenelements
- 80a bis 80d: Gleitanordnungen
- 82a bis 82d: Gleitanordnungen
- 90: Vorspannelement
- 92: Vorspannkörper
- 94a, 94c: Federelemente
- 100: weitere Hubsäule
- Z: Längsachse des ersten Säulenelements

## Patentansprüche

1. Hubsäule (10) für eine medizinische Einrichtung,
mit mindestens zwei Säulenelementen (12, 14), die in ihrer übereinstimmenden Längsrichtung relativ zueinander bewegbar sind, und
mit mindestens einem Gleitelement (40), das an einer Innenfläche (54a bis 54d) eines ersten der beiden Säulenelemente (12) befestigt ist und das eine Gleitfläche (50) hat, die an einer der Innenfläche (54a bis 54d) des ersten Säulenelements (12) zugewandten Außenfläche (18a bis 18d) eines zweiten der beiden Säulenelemente (14) gleitend gelagert ist,
wobei eine Vergussmasse (52) in einem Raum zwischen der Gleitfläche (50) des Gleitelements (40) und der Innenfläche (54a bis 54d) des ersten Säulenelements (12) ausgehärtet ist,
**dadurch gekennzeichnet, dass** eine senkrecht zur Längsachse des ersten Säulenelements (12) elastisch verformbare Dichtung (44) zwischen dem Gleitelement (40) und der Innenfläche (54a bis 54d) des ersten Säulenelements (12) um den die Vergussmasse (52) aufnehmenden Raum umlaufend angeordnet ist.

2. Hubsäule (10) nach Anspruch 1, **dadurch gekennzeichnet, dass** das erste Säulenelement (12) mindestens ein Durchgangsloch (30a, 30b) zum Einfüllen der auszuhärtenden Vergussmasse (52) hat.

3. Hubsäule (10) nach Anspruch 1 oder 2, **dadurch gekennzeichnet, dass** das Gleitelement (40) einen Tragekörper (42) und eine Gleitschicht mit einer die Gleitfläche (50) bildenden Oberfläche hat, und dass die Gleitschicht über die Gleitfläche (50) die Außenfläche (18a bis 18d) des zweiten Säulenelements (14) und der Tragekörper (42) die Vergussmasse (52) kontaktiert.

4. Hubsäule (10) nach Anspruch 3, **dadurch gekennzeichnet, dass** der Tragekörper (42) rechteckig geformt ist und die Gleitschicht zumindest auf einem Teil der der Außenfläche (18a bis 18d) des zweiten Säulenelements (14) zugewandten Oberfläche des Tragekörpers (42) angeordnet ist.

5. Hubsäule (10) nach einem der vorhergehenden Ansprüche, **dadurch gekennzeichnet, dass** das Gleitelement (40) durch die ausgehärtete Vergussmasse (52) an der Innenfläche (54a bis 54d) des ersten Säulenelements (12) haftet.

6. Hubsäule (10) nach einem der vorhergehenden Ansprüche, **dadurch gekennzeichnet, dass** das Gleitelement (40) mindestens ein Rastelement (46, 48) hat, das in einer Aussparung (24a, 24b) des ersten Säulenelements (12) aufgenommen ist und über das das Gleitelement (40) in Längsrichtung des ersten Säulenelements (12) fixiert ist.

7. Hubsäule (10) nach einem der vorhergehenden Ansprüche, **dadurch gekennzeichnet, dass** das erste Säulenelement (12) und das zweite Säulenelement (14) jeweils einen rechteckigen Querschnitt haben.

8. Hubsäule (10) nach Anspruch 7, **dadurch gekennzeichnet, dass** das mindestens eine Gleitelement (40) vier Gleitelemente umfasst, und dass an jeder der vier Innenflächen (54a bis 54d) des ersten Säulenelements (12) jeweils eines der vier Gleitelemente befestigt ist.

9. Hubsäule (10) nach einem der vorhergehenden Ansprüche, **dadurch gekennzeichnet, dass** das zweite Säulenelement (14) durch das mindestens eine Gleitelement (40) koaxial zur Längsachse des ersten Säulenelements (12) geführt ist.

10. Hubsäule (10) nach einem der vorhergehenden Ansprüche, **dadurch gekennzeichnet, dass** die mindestens zwei Säulenelemente (12, 14) ein weiteres Säulenelement (16) umfassen,
dass mindestens ein weiteres Gleitelement mit einer Gleitfläche vorgesehen ist,
dass das weitere Säulenelement (16) koaxial in dem zweiten Säulenelement (14) geführt ist und in der zum zweiten Säulenelement (14) übereinstimmenden Längsrichtung relativ zum zweiten Säulenelement (14) bewegbar ist,
dass die Gleitfläche des weiteren Gleitelements an einer der Innenfläche des zweiten Säulenelements (14) zugewandten Außenfläche des dritten Säulenelements (16) gleitend gelagert ist, und
dass eine weitere Vergussmasse in einem weiteren Raum zwischen der Gleitfläche des weiteren Gleitelements und der Innenfläche des zweiten Säulenelements (14) ausgehärtet ist.

11. Verfahren zum Zusammensetzen einer Hubsäule (10) mit mindestens zwei Säulenelementen (12, 14), die in ihrer übereinstimmenden Längsrichtung relativ zueinander bewegbar sind, bei dem mindestens ein mit einer Gleitfläche (50) versehenes Gleitelement (40) an einer Innenfläche (54a bis 54d) eines ersten der beiden Säulenelemente (12) befestigt und die Gleitfläche (50) des Gleitelements (40) an einer der Innenfläche (54a bis 54d) des ersten Säulenelements (12) zugewandten Außenfläche (18a bis 18d) eines zweiten der beiden Säulenelemente (14) gleitend gelagert wird, und
bei dem eine Vergussmasse (52) in einen Raum zwischen der Gleitfläche (50) des Gleitelements (40) und der Innenfläche (54a bis 54d) des ersten Säulenelements (12) eingebracht und ausgehärtet wird,
**dadurch gekennzeichnet, dass** zum Befestigen des Gleitelements (40) an der Innenfläche (54a bis 54d) des ersten Säulenelements (12) nacheinander folgende Schritte durchgeführt werden:
Einbringen eines Vorspannelements (90), an dessen Außenseite das Gleitelement (40) federnd gelagert ist, in das erste Säulenelement (12), bis an dem Gleitelement (40) angebrachte Rastelemente (46, 48) in dafür vorgesehene Aussparungen (24a, 26a, 24b, 26b) an der Innenfläche (54a bis 54d) des ersten Säulenelements (12) einrasten und das Gleitelennent (40) an dem ersten Säulenelement (12) in Längsrichtung festsetzen,
Einführen des zweiten Säulenelements (14) in das erste Säulenelement (12) in Längsrichtung derart, dass das Vorspannelement (90) beim Einführen in Längsrichtung relativ zu dem eingerasteten Gleitelement (40) verschoben und aus dem ersten Säulenelement (12) entfernt wird und eine an dem Gleitelement (40) angebrachte elastisch verformbare Dichtung (44) die Gleitfläche (50) des Gleitelements (40) an die Außenfläche (18a bis 18d) des zweiten Säulenelements (14) drückt.

12. Verfahren nach Anspruch 11, **dadurch gekennzeichnet, dass** der Raum zwischen der Gleitfläche (50) des einzubringenden Gleitelements (40) und der Innenfläche (54a bis 54d) des ersten Säulenelements (12) durch mindestens ein erstes in der Außenfläche des ersten Säulenelements (12) ausgebildetes Durchgangsloch (30a, 30b) mit der Vergussmasse (52) befüllt wird, und
Luft im Raum zwischen der Gleitfläche (50) des einzubringenden Gleitelements (40) und der Innenfläche (54a bis 54d) des ersten Säulenelements (12) durch mindestens ein zweites in der Außenfläche des ersten Säulenelements (12) ausgebildetes Durchgangsloch (28a, 28b) entweicht.

## Claims

1. A lifting column (10) for a medical device,
with at least two column members (12, 14), which are movable relative to one another in their coincident longitudinal direction, and
with at least one sliding member (40), which is secured to an inner surface (54a to 54d) of a first of the two column members (12) and which has a sliding surface (50) which is slidably mounted to an outer surface (18a to 18d) of a second of the two column members (14) that is facing the inner surface (54a to 54d) of the first column member (12).
wherein a casting compound (52) is cured in a space between the sliding surface (50) of the sliding member (40) and the inner surface (54a to 54d) of the first column member (12),
**characterized in that** a seal (44), which is elastically deformable perpendicular to the longitudinal axis of the first column member (12), is arranged between the sliding member (40) and the inner surface (54a to 54d) of the first column member (12) circumferentially around the space accommodating the casting compound (52).

2. The lifting column (10) according to claim 1, **characterized in that** the first column member (12) has at least one through hole (30a, 30b) for filling the casting compound (52) to be cured.

3. The lifting column (10) according to claim 1 or 2, **characterized in that** the sliding member (40) has a supporting body (42) and a sliding layer with a surface (50) forming the sliding surface (50), and that the sliding layer contacts the outer surface (18a to 18d) of the second column member (14) by means of the sliding surface (50), and the supporting body (42) contacts the casting compound (52).

4. The lifting column (10) according to claim 3, **characterized in that** the supporting body (42) is rectangular and that the sliding layer is arranged at least on a portion of the surface of the supporting body (42) facing the outer surface (18a to 18d) of the second column member (14).

5. The lifting column (10) according to any one of the preceding claims, **characterized in that** the sliding member (40) adheres to the inner surface (54a to 54d) of the first column member (12) by means of the cured casting compound (52).

6. The lifting column (10) according to any one of the preceding claims, **characterized in that** the sliding member (40) has at least one engagement member (46, 48), which is accommodated in a recess (24a, 24b) of the first column member (12) and by means of which the sliding member (40) is fixed in the longitudinal direction of the first column member (12).

7. The lifting column (10) according to any one of the preceding claims, **characterized in that** the first column member (12) and the second column member (14) each have a rectangular cross section.

8. The lifting column (10) according to claim 7, **characterized in that** the at least one sliding member (40) comprises four sliding members, and that, in each case, one of the four sliding members is secured to each one of the four inner surfaces (54a to 54d) of the first column member (12).

9. The lifting column (10) according to any one of the preceding claims, **characterized in that** the second column member (14) is guided through the at least one sliding member (40) coaxially to the longitudinal axis of the first column member (12).

10. The lifting column (10) according to any one of the preceding claims, **characterized in that** the at least two column members (12, 14) comprise a further column member (16),
that at least one further sliding member is provided with a sliding surface,
that the further column member (16) is guided coaxially in the second column member (14) and is movable relative to the second column member (14) in the longitudinal direction coincident with the second column member (14),
that the sliding surface of the further sliding member is slidably mounted on an outer surface of the third column member (16) facing the inner surface of the second column member (14), and
that a further casting compound is cured in a further space between the sliding surface of the further sliding member and the inner surface of the second column member (14).

11. A method for assembling a lifting column (10) with at least two column members (12, 14), which are movable relative to one another in their coincident longitudinal direction,
wherein at least one sliding member (40) provided with a sliding surface (50) is secured to an inner surface (54a to 54d) of a first of the two column members (12) and the sliding surface (50) of the sliding member (40) is slidably mounted to an outer surface (18a to 18d) of a second of the two column members (14) which is facing the inner surface (54a to 54d) of the first column member (12), and
wherein a casting compound (52) is introduced and cured in a space between the sliding surface (50) of the sliding member (40) and the inner surface (54a to 54d) of the first column member (12),
**characterized in that**, for securing the sliding member (40) to the inner surface (54a to 54d) of the first column member (12), the following steps are carried out successively:
introducing a biasing member (90), on the outside of which the sliding member (40) is resiliently mounted, into the first column member (12) until engagement members (46, 48) attached to the sliding member (40) engage in recesses (24a, 26a, 24b, 26b) provided therein on the inner surface (54a to 54d) of the first column member (12) and fix the sliding member (40) on the first column member (12) in the longitudinal direction,
inserting the second column member (14) into the first column member (12) in the longitudinal direction such that the biasing member (90), upon inserting, is moved in the longitudinal direction relative to the engaged sliding member (40) and is removed from the first column member (12), and an elastically deformable seal (44) attached to the sliding member (40) pushes the sliding surface (50) of the sliding member (40) against the outer surface (18a to 18d) of the second column member (14).

12. The method according to claim 11, **characterized in that** the space between the sliding surface (50) of the sliding member (40) to be introduced and the inner surface (54a to 54d) of the first column member (12) is filled with the casting compound (52) through at least one first through hole (30a, 30b) formed in the outer surface of the first column member (12), and
air in the space between the sliding surface (50) of the sliding member (40) to be introduced and the inner surface (54a to 54d) of the first column member (12) escapes through at least one second through hole (28a, 28b) formed in the outer surface of the first column member (12).

## Revendications

1. Colonne de levage (10) pour un dispositif médical, comportant au moins deux éléments de colonne (12, 14) qui sont déplaçables l'un par rapport à l'autre dans leur direction longitudinale concordante, et
comportant au moins un élément coulissant (40) qui est fixé à une surface intérieure (54a à 54d) d'un premier des deux éléments de colonne (12) et qui a une surface coulissante (50), qui est logée de manière coulissante sur une surface extérieure (18a à 18d), tournée vers la surface intérieure (54a à 54d) du premier élément de colonne (12), d'un deuxième des deux éléments de colonne (14),
une masse de scellement (52) étant durcie dans un espace entre la surface coulissante (50) de l'élément coulissant (40) et la surface intérieure (54a à 54d) du premier élément de colonne (12),
**caractérisée en ce qu'**un joint (44) élastiquement déformable perpendiculairement à l'axe longitudinal du premier élément de colonne (12) est disposé autour de l'espace logeant la masse de scellement (52) entre l'élément coulissant (40) et la surface intérieure (54a à 54d) du premier élément de colonne (12).

2. Colonne de levage (10) selon la revendication 1, **caractérisée en ce que** le premier élément de colonne (12) a au moins un trou de passage (30a, 30b) pour remplir la masse de scellement (52) à durcir.

3. Colonne de levage (10) selon la revendication 1 ou 2, **caractérisée en ce que** l'élément coulissant (40) a un corps de support (42) et une couche de glissement avec une surface formant la surface coulissante (50) et **en ce que** la couche de glissement est en contact avec la surface extérieure (18a à 18d) du deuxième élément de colonne (14) sur la surface coulissante (50) et le corps de support (42) avec la masse de scellement (52).

4. Colonne de levage (10) selon la revendication 3, **caractérisée en ce que** le corps de support (42) est de forme rectangulaire et la couche de glissement est disposée au moins sur une partie de la surface du corps de support (42) tournée vers la surface extérieure (18a à 18d) du deuxième élément de colonne (14).

5. Colonne de levage (10) selon l'une quelconque des revendications précédentes, **caractérisée en ce que** l'élément coulissant (40) adhère à la surface intérieure (54a à 54d) du premier élément de colonne (12) grâce à la masse de scellement (52) durcie.

6. Colonne de levage (10) selon l'une quelconque des revendications précédentes, **caractérisée en ce que** l'élément coulissant (40) a au moins un élément d'arrêt (46, 48) qui est réceptionné dans un évidement (24a, 24b) du premier élément de colonne (12) et sur lequel est fixé l'élément coulissant (40) dans la direction longitudinale du premier élément de colonne (12) .

7. Colonne de levage (10) selon l'une quelconque des revendications précédentes, **caractérisée en ce que** le premier élément de colonne (12) et le deuxième élément de colonne (14) ont respectivement une section transversale rectangulaire.

8. Colonne de levage (10) selon la revendication 7, **caractérisée en ce que** l'au moins un élément coulissant (40) comprend quatre éléments coulissants et **en ce que** respectivement un des quatre éléments coulissants est fixé sur chacune des quatre surfaces intérieures (54a à 54d) du premier élément de colonne (12).

9. Colonne de levage (10) selon l'une quelconque des revendications précédentes, **caractérisée en ce que** le deuxième élément de colonne (14) est acheminé de manière coaxiale à l'axe longitudinal du premier élément de colonne (12) par l'au moins un élément coulissant (40).

10. Colonne de levage (10) selon l'une quelconque des revendications précédentes, **caractérisée en ce que** les au moins deux éléments de colonne (12, 14) comprennent un autre élément de colonne (16),
**en ce qu'**au moins un autre élément coulissant est prévu avec une surface coulissante,
**en ce que** l'autre élément de colonne (16) est acheminé de manière coaxiale dans le deuxième élément de colonne (14) et est déplaçable par rapport au deuxième élément de colonne (14) dans la direction longitudinale qui concorde avec le deuxième élément de colonne (14),
**en ce que** la surface coulissante de l'autre élément coulissant est logée de manière coulissante sur une surface extérieure du troisième élément de colonne (16) tournée vers la surface intérieure du deuxième élément de colonne (14), et
**en ce qu'**une autre masse de scellement est durcie dans un autre espace entre la surface coulissante de l'autre élément coulissant et la surface intérieure du deuxième élément de colonne (14).

11. Procédé pour l'assemblage d'une colonne de levage (10) avec au moins deux éléments de colonne (12, 14), qui sont déplaçables l'un par rapport à l'autre dans leur direction longitudinale concordante,
pour lequel au moins un élément coulissant (40) prévu avec une surface coulissante (50) est fixé sur une surface intérieure (54a à 54d) d'un premier des deux éléments de colonne (12) et la surface coulissante (50) de l'élément coulissant (40) est logée de manière coulissante sur une surface extérieure (18a à 18d), tournée vers la surface intérieure (54a à 54d) du premier élément de colonne (12), d'un deuxième des deux éléments de colonne (14), et
pour lequel une masse de scellement (52) est appliquée et durcie dans un espace entre la surface coulissante (50) de l'élément coulissant (40) et la surface intérieure (54a à 54d) du premier élément de colonne (12),
**caractérisé en ce que** pour fixer l'élément coulissant (40) sur la surface intérieure (54a à 54d) du premier élément de colonne (12), les étapes suivantes doivent être réalisées l'une après l'autre :
introduire dans le premier élément de colonne (12) un élément de précontrainte (90), sur la partie extérieure duquel est logé élastiquement l'élément coulissant (40), jusqu'à ce que des éléments d'arrêt (46, 48) disposés sur l'élément coulissant (40) s'enclenchent dans des évidements (24a, 26a, 24b, 26b) prévus à cet effet sur la surface intérieure (54a à 54d) du premier élément de colonne (12), et fixent l'élément coulissant (40) sur le premier élément de colonne (12) dans la direction longitudinale,
insérer le deuxième élément de colonne (14) dans le premier élément de colonne (12) en direction longitudinale de telle sorte que l'élément de précontrainte (90) soit déplacé par rapport à l'élément coulissant (40) enclenché lors de l'insertion dans la direction longitudinale et retiré du premier élément de colonne (12) et qu'un joint (44) élastiquement déformable disposé sur l'élément coulissant (40) appuie la surface coulissante (50) de l'élément coulissant (40) sur la surface extérieure (18a à 18d) du deuxième élément de colonne (14) .

12. Procédé selon la revendication 11, **caractérisé en ce que** l'espace entre la surface coulissante (50) de l'élément coulissant (40) à introduire et la surface intérieure (54a à 54d) du premier élément de colonne (12) est rempli de masse de scellement (52) à travers au moins un premier trou de passage (30a, 30b) formé dans la surface extérieure du premier élément de colonne (12), et
l'air dans l'espace entre la surface coulissante (50) de l'élément coulissant (40) à introduire et la surface intérieure (54a à 54d) du premier élément de colonne (12) est évacué à travers au moins un deuxième trou de passage (28a, 28b) formé dans la surface extérieure du premier élément de colonne (12).
